Europäisches Patentamt

European Patent Office

Office européen des brevets

(11) Veröffentlichungsnummer: **0 427 916 A2**

## (12) EUROPÄISCHE PATENTANMELDUNG

(21) Anmeldenummer: 90112887.6

(51) Int. Cl.5: **F16F 15/12**

(22) Anmeldetag: 06.07.90

(30) Priorität: 16.11.89 DE 3938033

(43) Veröffentlichungstag der Anmeldung:
22.05.91 Patentblatt 91/21

(84) Benannte Vertragsstaaten:
AT BE CH DE ES FR GB IT LI NL SE

(71) Anmelder: Firma Carl Freudenberg
Höhnerweg 2-4
W-6940 Weinheim/Bergstrasse(DE)

(72) Erfinder: Andrä, Rainer-Horst, Dr.
Dehrner Strasse 19
W-6250 Limburg(DE)

(54) Verfahren zur Herstellung eines Drehschwingungsdämpfers.

(57) Ein Verfahren zur Herstellung eines Drehschwingungsdämpfers, bei dem ein Blech durch Kaltverformung eines ringförmigen Verformungsabschnittes (1) zu einem Schwungring (2) umgestaltet und mittels einer Zwischenschicht (3) aus Gummi an einem Nabenring (4) festgelegt wird. Das Blech wird in dem radial innerhalb des Verformungsabschnittes (1) liegenden Halteabschnitt formfixiert gehalten und in dem Verformungsabschnitt (1) unter Vermeidung einer Einfaltung des Profils der Einwirkung eines eine radial gerichtete Stauchung bewirkenden Werkzeuges (2) ausgesetzt und gleichzeitig relativ zu dem Werkzeug (2) um seine Achse gedreht.

Fig. 1

Die Erfindung betrifft ein Verfahren zur Herstellung eines Drehschwingungsdämpfers, bei dem ein Blech durch Kaltverformung eines ringförmigen Verformungsabschnittes zu einem Schwungring umgestaltet und mittels einer Zwischenschicht aus Gummi an einem Nabenring festgelegt wird.

Ein solches Verfahren ist aus dem deutschen Gebrauchsmuster 86 10 001.7 bekannt. Der Verformungsabschnitt wird dabei unter Vermeidung einer Veränderung der Dicke des eingesetzten Bleches hinsichtlich seines Profiles so verändert, daß sich ein in axialer Richtung einseitig geöffneter Hohlraum ergibt. Die die Größe des sich ergebenden Trägheitsmomentes maßgeblich bestimmende Materialzusammenballung im Bereich des Außenumfanges des Schwungringes ist wenig befriedigend. Auch setzt seine rotationssymmetrische Erzeugung erhebliches Know-how voraus sowie einen großen Werkzeugaufwand.

Der Erfindung liegt die Aufgabe zugrunde, das Verfahren der eingangs genannten Art derart weiterzuentwickeln, daß sich auf vereinfachte Weise ein Schwungring von relativ vergrößertem Trägheitsmoment ergibt.

Diese Aufgabe wird erfindungsgemäß bei einem Verfahren der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Verfahren ist es vorgesehen, daß das Blech in dem radial innerhalb des Verformungsabschnittes liegenden Haltebereich formfixiert gehalten und in dem Verformungsabschnitt unter Vermeidung einer Einfaltung des Profils der Einwirkung eines eine radial gerichtete Stauchung bewirkenden Werkzeuges ausgesetzt und gleichzeitig relativ zu dem Werkzeug um seine Achse gedreht wird. Durch die senkrecht zur Rotationsachse gerichtete, radiale Stauchung des Bleches im Bereich des ringförmig ausgebildeten Verformungsabschnittes gelingt es ganz problemlos, eine große Materialanhäufung im Bereich des Außenumfanges des erhaltenen Schwungringes zu erzeugen, die hinsichtlich ihres Querschnittes die Dicke des ursprünglich eingesetzten Bleches in jeder Richtung überschreitet. Eine Relation von 3 bis 4 ist bei Verwendung eines Ausgangsbleches aus Stahl leicht möglich.

Das eingesetzte Blech ist von ebener Gestalt und außenseitig kreisförmig begrenzt. Es kann während seiner formfixierten Festlegung zwischen axial an seine Stirnflächen angelegten, rotationssymmetrisch gestalteten Halteplatten kraftschlüssig derart verpreßt sein, daß eine Relativverlagerung zu den Halteplatten während der Durchführung der Kaltverformung ausgeschlossen ist. Für die Erzeugung eines Schwungringes von guter Rotationssymmetrie ist das von großer Wichtigkeit.

Als besonders zweckmäßig hat es sich erwiesen, wenn die radiale Stauchung des Verformungsabschnittes mittels eines Rollenwerkzeuges bewirkt wird. Dieses sollte eine Verformungsrolle haben, welche um eine Achse drehbar ist, die sich parallel zu der Achse der Halteplatten erstreckt. Die Verformung des Verformungsabschnittes läßt sich hierdurch besonders gleichmäßig gestalten.

Der Verformungsabschnitt kann in radialer Richtung so weitgehend gestaucht werden, daß seine Stirnflächen beiderseits zugeordnete Formflächen der Halteplatten und/oder des Rollenwerkzeuges anliegend berühren. Die Gestalt der Formflächen wird hierdurch auf dem Verformungsabschnitt nachgebildet, was es ermöglicht, den Verformungsabschnitt in präzise vorher bestimmter Weise zu gestalten und ihm beispielsweise ein symmetrisches oder unsymmetrisches Profil zu geben. Dabei ist es möglich, in den Außenumfang des Verformungsabschnittes während der Stauchung radial gerichtete Eintiefungen einzuprägen. Diese können zur Bildung eines Riemenscheiben-oder Zahnradprofils gleichmäßig in Umfangsrichtung verteilt werden und zum nachträglichen Auflegen eines Zahnriemens oder eine Rollenkette dienen. Eine mechanische Nachbearbeitung kann vielfach entfallen.

Das erfindungsgemäße Verfahren ermöglicht die Erzeugung von Drehschwingungsdämpfern, bei denen das Leistungs-Gewichtsverhältnis besonders günstig ist. Hierbei ist es von hervorzuhebender Bedeutung, daß eine schneidende Bearbeitung des Schwungringes oder die Anwendung von Gießverfahren bei dessen Herstellung entbehrlich ist.

Der Gegenstand der Erfindung wird nachfolgend anhand der als Anlage beigefügten Zeichnungen weiter verdeutlicht. Es zeigen :

Fig. 1 die Durchführung des erfindungsgemäßen Verfahrens zu Beginn der Umformung des Verformungsabschnittes;

Fig. 2 die in Fig. 1 gezeigte Verfahrensweise am Ende der Durchführung des Verformungsvorganges;

Fig. 3 einen gebrauchsfertigen Drehschwingungsdämpfer in quergeschnittener Darstellung;

Fig. 4 den Drehschwingungsdämpfer nach Fig. 3 in einer Ansicht von vorn.

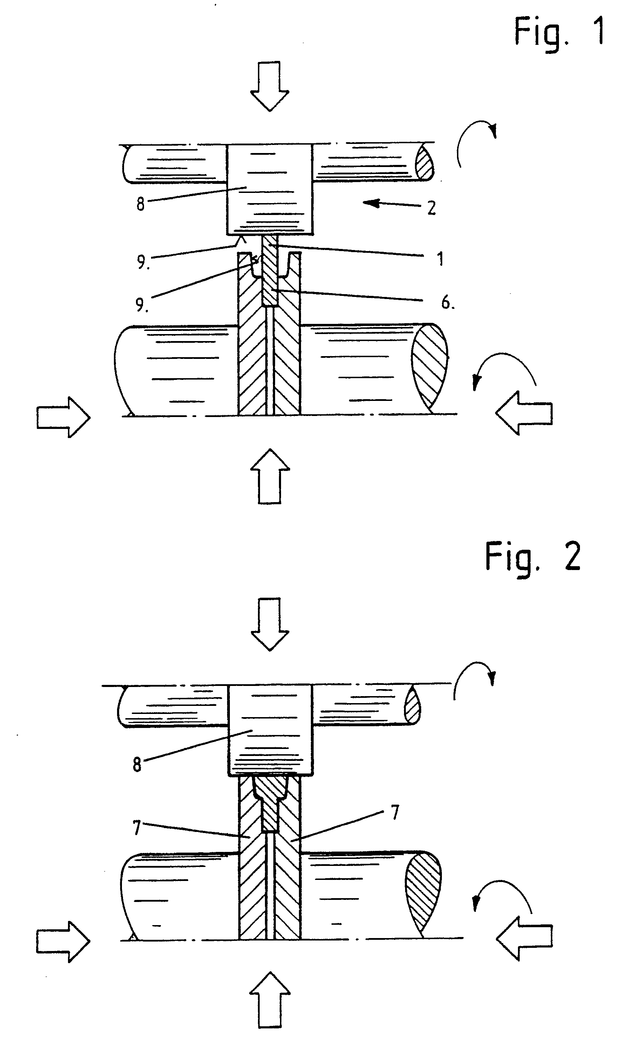

In den Fig. 1 und 2 wird die Herstellung des Schwungringes während der Durchführung des erfindungsgemäßen Verfahrens in schematischer Weise angedeutet.

Es wird ein Blech aus Stahl verwendet, welches im dargestellten Fall die Gestalt einer kreisringförmig ausgebildeten, ebenen Scheibe hat. Diese wird in der in Fig. 1 gezeigten Weise in Ausnehmungen eines entsprechenden Profils von Halteplatten 7 eingesetzt und zwischen deren Stirnflächen verpreßt. Eine Relativverlagerung der Scheibe in Umfangsrichtung oder in radialer Richtung während der nachfolgend durchgeführten Umformung des Verformungsabschnittes ist hierdurch ausgeschlossen. Dies wird nachfolgend beschrieben.

Zur Durchführung der Umformung des Verformungsabschnittes werden die Halteplatten 7 gemeinsam mit dem darin festgelegten Blech relativ zu dem Werkzeug 2 in eine um die Achse 5 rotierende Bewegung versetzt. Das Werkzeug 2 ist als Rollenwerkzeug ausgebildet und mit einer zylindrisch gestalteten Formfläche 9 versehen. Es ist parallel zur Achse 5 drehbar gelagert und in Richtung der Achse 5 verschiebbar. Die sich ergebende Relativbewegung ist durch schwarz eingetragene Pfeile angedeutet.

Bei einer Verschiebung des Rollenwerkzeuges 8 im angegebenen Sinne ergibt sich zunächst eine Berührung des Außenumfanges der in eine Drehbewegung versetzten Scheibe und nachfolgend eine Kaltverformung des Verformungsabschnittes 1 der Scheibe. Dieser wird hinsichtlich seiner Außenkonturen zunehmend an das Profil der Formflächen 9 des Rollenwerkzeuges 8 und der Halteplatten 7 angepaßt, bis die in Fig. 2 gezeigte, endgültige Gestalt des Schwungringes erreicht ist. Dieser kann nach der Zurückbewegung des Rollenwerkzeuges 8 in die Ausgangsposition sowie einer Auseinanderbewegung der Halteplatten 7 entnommen und in ein Vulkanisationswerkzeug überführt werden, in welchem die Vereinigung mit dem Nabenring auf an sich bekannte Weise erfolgt.

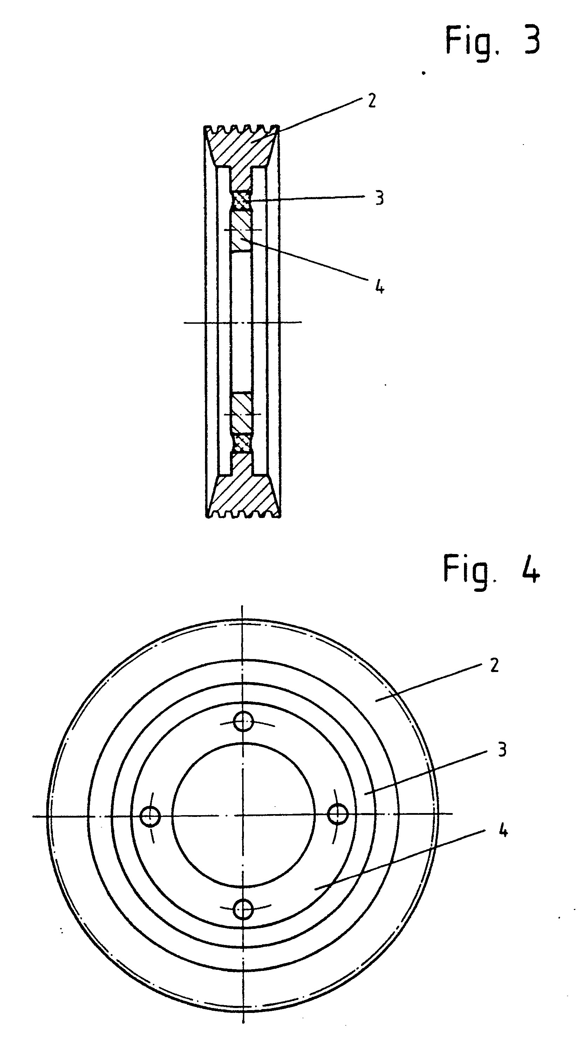

Ein gebrauchsfertiger Drehschwingungsdämpfer wird in den Fig. 3 und 4 in quergeschnittener Darstellung sowie in einer Ansicht von vorn gezeigt. Der Schwungring ist mit 2 bezeichnet, die aus Gummi bestehende Zwischenschicht mit 3 und der Nabenring mit 4. Der Schwungring ist im Bereich seines Außenumfanges mit sich in Umfangsrichtung erstreckenden Eintiefungen versehen, welche die Rillen eines Poly-V-Riemenscheibenprofils bilden und das Auflegen eines Poly-V-Keilriemens ermöglichen. Die Eintiefungen werden während oder nach der Kaltverformung des Verformungsabschnittes mit Hilfe eines Rollenwerkzeuges erzeugt und bedeuten keine Nachbearbeitung. Ein hiervon abweichende Profilgestaltung und beispielsweise die Anbringung eines Zahnrad- oder Rollenkettenprofils ist auf gleiche Weise möglich und bedarf der Verwendung entsprechend gestalteter Formflächen.

## Ansprüche

1. Verfahren zur Herstellung eines Drehschwingungsdämpfers, bei dem ein Blech durch Kaltverformung eines ringförmigen Verformungsabschnittes zu einem Schwungring umgestaltet und mittels einer Zwischenschicht aus Gummi an einem Nabenring festgelegt wird, dadurch gekennzeichnet, daß das Blech in einem radial innerhalb des Verformungsabschnittes (1) liegenden Haltebereich formfixiert gehalten und in dem Verformungsabschnitt (1) unter Vermeidung einer Einfaltung des Profils der Einwirkung eines eine radial gerichtete Stauchung bewirkenden Werkzeuges (2) ausgesetzt und gleichzeitig relativ zu dem Werkzeug (2) um seine Achse gedreht wird.

2. Verfahren nach Anspruch 1, dadurch gekennzeichnet, daß das Blech während seiner formfixierten Festlegung zwischen axial an seine Stirnflächen angelegten, rotationssymmetrisch gestalteten Halteplatten (7) verpreßt wird.

3. Verfahren nach Anspruch 1 bis 2, dadurch gekennzeichnet, daß die radiale Stauchung des Verformungsabschnittes (1) mittels eines Rollenwerkzeuges (8) bewirkt wird.

4. Verfahren nach Anspruch 2 bis 3, dadurch gekennzeichnet, daß der Verformungsabschnitt (1) in radialer Richtung so weitgehend gestaucht wird, daß seine Stirnflächen beiderseits zugeordneter Formflächen (9) der Halteplatten (7) und/oder des Rollenwerkzeuges (8) anliegend berühren.

5. Verfahren nach Anspruch 1 bis 4, dadurch gekennzeichnet, daß in den Außenumfang des Verformungsabschnittes (1) während der Stauchung radial gerichtete Eintiefungen eingeprägt werden.

6. Verfahren nach Anspruch 5, dadurch gekennzeichnet, daß die Eintiefungen zur Bildung eines Riemenscheiben- oder Zahnradprofils gleichmäßig in Umfangsrichtung verteilt werden.

Fig. 1

Fig. 2

## Fig. 3

## Fig. 4